# EUROPÄISCHE PATENTSCHRIFT

(11) **EP 0 591 669 B1**
(45) Veröffentlichungstag und Bekanntmachung des Hinweises auf die Patenterteilung: **09.04.1997**
(21) Anmeldenummer: 93113615.4
(22) Anmeldetag: 26.08.1993
(51) Int. Cl.: B60R 25/00, E05B 65/36

(54) **Verfahren zur Zentralverriegelung eines Kraftfahrzeuges mit Diebstahlsicherungsfunktion und Einrichtung zur Durchführung des Verfahrens**
Method of central vehicle locking with anti-theft function and apparatus for the same
Procédé de verrouillage central d'un véhicule à moteur comportant une fonction anti-vol et dispositif à cet effet

(30) Priorität: 08.10.1992 DE 4233887
(43) Veröffentlichungstag der Anmeldung: 13.04.1994
(73) Patentinhaber: VDO Adolf Schindling AG, D-60487 Frankfurt (DE)
(72) Erfinder: Ranzenberger, Ralf, D-55278 Uelversheim (DE); Schmischke, Kai, D-63543 Neuberg (DE)
(74) Vertreter: Klein, Thomas, Dipl.-Ing. (FH)

(56) Entgegenhaltungen:
- FR-A- 2 603 538
- GB-A- 2 252 438

## Beschreibung

Die Erfindung betrifft ein Verfahren zur Zentralverriegelung eines Kraftfahrzeuges mit Diebstahlsicherungsfunktion, bei welchem durch ein Steuergerät nach Erhalt eines Steuerbefehls mindestens eine Schließstelle des Kraftfahrzeuges angesteuert wird und dabei die Zentralverriegelung und die Diebstahlsicherung aktiviert bzw. deaktiviert werden sowie eine Einrichtung zur Durchführung des Verfahrens.

Viele moderne Kraftfahrzeuge, besonders im Pkw-Bereich, sind heutzutage mit einer Zentralverriegelungsanlage ausgerüstet. Durch die steigende Zahl der Autodiebstähle bietet es sich daher an, immer mehr Sicherheitsfunktionen in Zentralverriegelungsanlagen zu integrieren. So besitzen schon viele Anlagen Zusatzfunktionen, wie etwa "Diebstahlsichern". Aus der US-PS 48 76 649 ist eine Diebstahlsicherungseinrichtung bekannt, bei welcher bei Vorliegen eines Schließbefehls vor Aktivierung der Diebstahlsicherungsfunktion überprüft wird, ob alle Personen das Fahrzeug verlassen haben. Hierbei wird die Funktion "Diebstahlsichern" in der Regel durch mechanische Bauelemente realisiert, etwa in der Art, daß Verriegelungsbolzen ein Heben der Türknopfelemente verhindern.

Eine weitere Variante ist die mechanische Entkopplung der Türknopfelemente von der restlichen Türschloßmechanik.

Es ist eine Einrichtung bekannt, bei welcher pneumatische Stellglieder vorgesehen sind, die die Zentralverriegelung und die Diebstahlsicherung über dasselbe Druckleitungssystem ansteuern und bei denen der Steuerdruck für die Zentralverriegelung niedriger eingestellt ist als für die Diebstahlsicherung. Da beide Funktionen sich nur durch die Höhe des Ansteuerdrucks unterscheiden, ist mittels einer Störfall-Einrichtung dafür gesorgt, daß nach dem Erreichen des Steuerdrucks für die Zentralverriegelung ein weiterer Druckanstieg nur stattfinden kann, wenn ein Schaltbefehl für die Diebstahlsicherung vorliegt.

Mit dieser für pneumatische Stellglieder konzipierten Störfall-Einrichtung oder mit gleichwirkenden Einrichtungen für nicht pneumatische Stellglieder läßt sich aber nicht verhindern, daß Personen im Fahrzeug eingeschlossen werden, wenn die Diebstahlsicherung eingeschaltet ist, wenn also beim Verlassen des Fahrzeuges unter Zurücklassung einer oder mehrerer Personen aus Sicherheitsgründen der Schaltbefehl "Zentralverriegelung" eingegeben werden soll, versehentlich aber zusätzlich der Schaltbefehl
"Diebstahlsicherung" eingegeben wird. Mit der Ausführung des Schaltbefehls "Diebstahlsicherung" ist das Fahrzeug weder von außen noch von innen zu öffnen, weil die entsprechenden Betätigungshebel entweder blockiert oder entkoppelt sind. Eine Überwindung der Diebstahlsicherung von innen muß deswegen verhindert werden, weil man die Diebstahlsicherung sonst durch Einschlagen der Scheibe und Betätigung des inneren Betätigungshebels leicht außer Funktion setzen könnte.

Aus einer versehentlich aktivierten Diebstahlsicherung können sich für eingeschlossene Personen erhebliche Gefahren ergeben, z. B. wenn sich das Fahrzeug auf abschüssiger Straße selbsttätig in Bewegung setzt, wenn das geparkte Fahrzeug in einen Verkehrsunfall verwickelt wird oder wenn im Fahrzeug Feuer ausbricht.

Der Erfindung liegt somit die Aufgabe zugrunde, ein Verfahren anzugeben, bei welchem die Diebstahlsicherungsfunktion der Zentralverriegelung nicht ausgeführt werden kann, solange sich noch eine Person im Fahrzeug befindet.

Die Aufgabe wird durch die Merkmale des Patentanspruchs 1 gelöst.

Der Vorteil der Erfindung besteht darin, daß unabhängig von der Aufmerksamkeit des Fahrzeugnutzers die Diebstahlsicherungsfunktion unterbunden wird, solange sich noch eine Person im Fahrzeug befindet. Außerdem wird gewährleistet, daß auch Personen, welche sich durch Einschlagen von einer Scheibe gewaltsam Zugang zum Fahrzeuginneren verschafft haben, die Diebstahlsicherung nicht außer Betrieb setzen können.

Eine vorteilhafte Anordnung zur Zentralverriegelung mit Diebstahlsicherungsfunktion besteht aus einem mit den Schließstellen des Kraftfahrzeuges verbundenen Steuergerät, welches von einer Betätigungseinrichtung zur Ausführung der Zentralverriegelung und der Diebstahlsicherung sowie von einer Überwachungseinrichtung zur Feststellung der Anwesenheit einer Person im Kraftfahrzeug ansteuerbar ist, wobei im Steuergerät eine Sperrschaltung vorgesehen ist, die die Diebstahlsicherung bei Vorliegen eines Signals der Überwachungseinrichtung verhindert. sowie ein Zeitglied angeordnet ist, mit dem die Ausführung der Diebstahlsicherungs funktion in jedem Fall um einen wählbaren Zeitabschnitt verzögert wird.

Zur Ausführung des Erfindungsgedankens sind als Überwachungseinrichtung alle Signalgeber geeignet, mit denen sich die Anwesenheit einer Person im Kraftfahrzeug feststellen läßt. Einige Beispiele sind in den Unteransprüchen 3 bis 8 gekennzeichnet.

In allen Fällen bewirken nachträglich, d. h. nach Ausführung des Schaltbefehls "Diebstahlsicherung" erzeugte Signale aus den genannten Gründen keine Aufhebung der Diebstahlsicherung.

Man kann selbstverständlich nebeneinander auch verschiedene Signalgeber vorsehen, um die Funktionssicherheit der Sperrschaltung zu verbessern.

Die Erfindung läßt zahlreiche Ausführungen zu. Einige davon sollen anhand der in der Zeichnung dargestellten Figuren näher erläutert werden. Es zeigt:
- Fig. 1: Einrichtung zur Zentralverriegelung mit Diebstahlsicherungsfunktion,
- Fig. 2: Ablauf des erfindungsgemäßen Verfahrens mit einer Diebstahlwarnanlage als Signalgeber,
- Fig. 3: Ablauf des erfindungsgemäßen Verfahrens mit Sitz- und Gurtkontakten als Signalgeber,
- Fig. 4-8: logische Verknüpfung der Gurt- und Sitzkontakte.

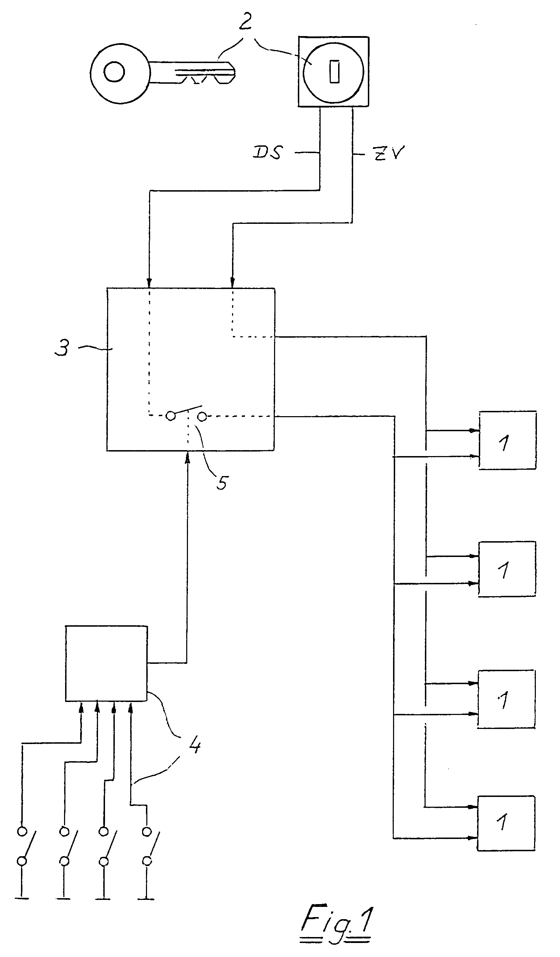

Gemäß Fig. 1 enthält die Einrichtung zur Zentralverriegelung ZV und Diebstahlsicherung DS eine Mehrzahl von Schließstellen 1 mit je zwei fernbedienbaren, von einer zentralen Energieversorgung versorgten Stellgliedern, eine Betätigungseinrichtung 2 mit Schlüssel, Schließzylinder und Kontakte für Zentralverriegelung und Diebstahlsicherung sowie ein zentrales Steuergerät 3, in dem die Schaltbefehle Zentralverriegelung und Diebstahlsicherung umgesetzt und von dem aus die Stellglieder der Schließstellen 1 angesteuert werden.

Das zentrale Steuergerät 3 kann dabei eine Zentralverriegelungselektronik oder ein Mikroprozessor sein.

Außerdem sind eine Überwachungsschaltung 4, welche bei Vorhandensein von Personen im Fahrzeuginneren Signale an das Steuergerät 3 gibt und eine Sperrschaltung 5 vorgesehen. Die Sperrschaltung 5 ist dabei im Steuergerät 3 angeordnet und ist in der Fig. 1 symbolisch als einfacher Schließer dargestellt, der bei Vorliegen eines Signals durch die Überwachungseinrichtung 4 öffnet, so daß der Diebstahlsicherungs-Befehl nicht ausgeführt werden kann.

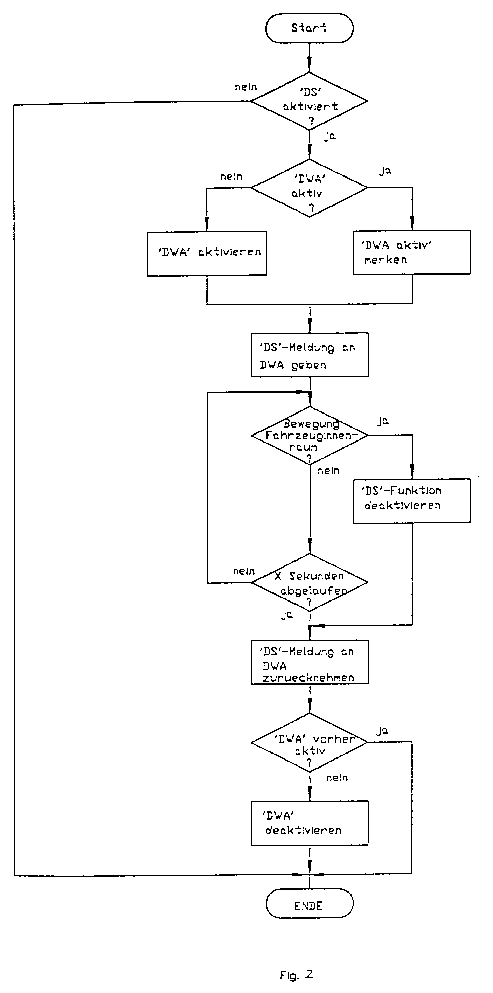

Die Überwachungseinrichtung 4 wird dabei gemäß Fig. 2 von einer integrierten oder extern angeschlossenen Diebstahlwarnanlage realisiert. Diese Diebstahlwarnanlage sendet dem Steuergerät 3 eine besondere Information, durch welche Bewegungen von im Fahrzeuginnenraum befindlichen Personen mitgeteilt werden.

Erhält die Zentralverriegelungselektronik 3 den Befehl, das Fahrzeug zu verschließen, wird gleichzeitig die Funktion "Diebstahlsichern" aktiviert. Ist dies der Fall, so wird überprüft, ob die Diebstahlwarnanlage bereits aktiv ist. Ist dies nicht der Fall, so wird die Diebstahlwarnanlage aktiviert.

Dieses Ereignis der erzwungenen Aktivierung wird gespeichert, damit die Diebstahlwarnanlage später wieder ausgeschaltet werden kann.

Anschließend wird der Diebstahlwarnanlage von der Zentralverriegelung mitgeteilt, daß die Diebstahlsicherungsfunktion aktiviert wurde. Dies kann bei extern angeschlossenen Diebstahlwarnanlagen durch direkte Eindraht-Verbindung geschehen, aber auch die Übermittlung innerhalb eines lokalen Netzwerkes (CAN usw.) sind denkbar.

Solange diese Meldung bestehen bleibt, meldet die Diebstahlwarnanlage eine Bewegung im Fahrzeuginnenraum an die Zentralverriegelungsanlage ohne ihren üblichen, meist akustischen Alarm auszulösen.

Die Zentralverriegelung behält diesen Zustand nun für einen Zeitraum von x Sekunden bei. Erhält die Zentralverriegelung innerhalb dieses Zeitraumes von x Sekunden keine Rückmeldung der Warnanlage über erkannte Bewegungen im Fahrzeuginnenraum, so bleibt die Funktion "Diebstahlsichern" weiterhin aktiviert.

Werden jedoch Bewegungen im Fahrzeuginnenraum registriert, dann wird die Diebstahlsicherungsfunktion deaktiviert. Somit ist sichergestellt, daß im Innenraum befindliche Personen das Fahrzeug bei Bedarf verlassen können.

Nach Ablauf des Zeitraumes von x Sekunden wird die Meldung über die Aktivierung der Diebstahlsicherungsfunktion wieder zurückgenommen. Somit löst die Diebstahlwarnanlage bei einer Bewegung im Fahrzeuginnenraum wieder einen normalen, meist akustischen Alarm aus. War die Diebstahlwarnanlage zum Zeitpunkt der Aktivierung der Diebstahlsicherungsfunktion ausgeschaltet, so wird sie nun folgerichtig wieder deaktiviert.

Eine andere Möglichkeit, festzustellen, ob sich noch Personen im Kraftfahrzeug aufhalten, besteht darin, daß von der Zentralverriegelungselektronik 3 elektrische Kontakte in den Fahrzeugsitzen und/oder den
Sicherheitsgurtschloßmechanismen abgefragt werden.

So schließen oder öffnen z. B. die Kontakte in den Sitzen, sobald sich eine Person mit einem vorgegebenen Mindestgewicht in den entsprechenden Sitz setzt.

Die Kontakte in den Sicherheitsgurtschloßmechanismen schließen oder öffnen beim Einstecken des Sicherheitsgurtes in den Gurthalter. Hierbei können auch vorhandene Gurtwarnsysteme benutzt werden.

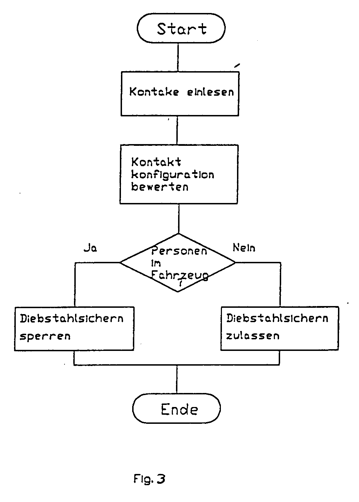

Die entstehenden Kontaktkonfigurationen werden auch hier entweder über eine Zentralverriegelungselektronik oder eine Mikroprozessoreinheit ausgewertet. Gemäß Fig. 3 gibt die Zentralverriegelungselektronik oder die Mikroprozessoreinheit nach Auswertung der entsprechenden Eingangssignale die Ausführung der Funktion "Diebstahlsichern" frei oder sperrt die Ausführung dieser Funktion. Hierbei stellt eine zyklische Bestromung der Kontakte eine mögliche Ausführungsvariante dar.

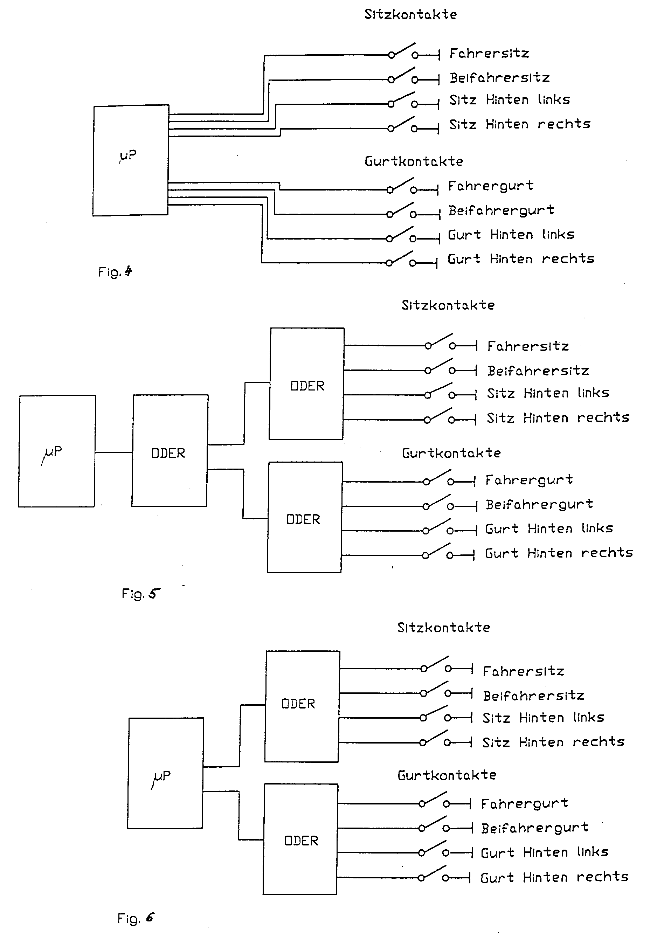

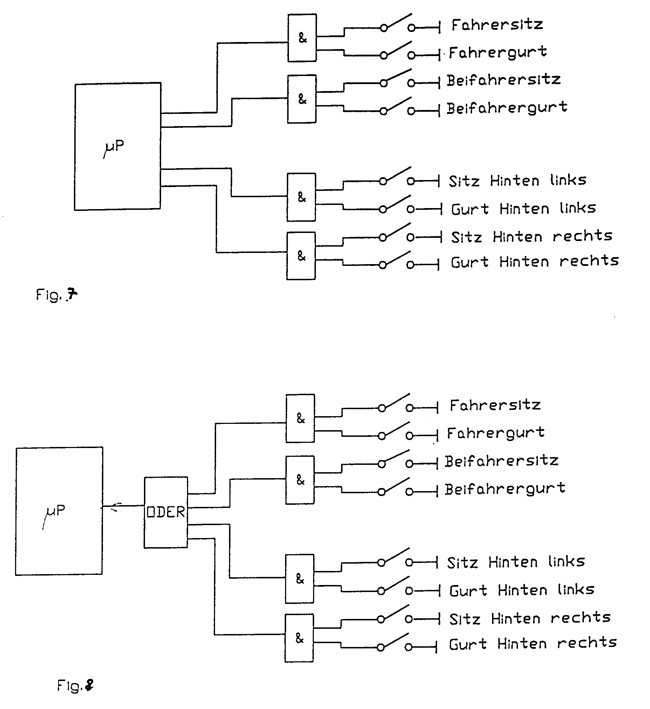

Die Zuleitung der Kontaktkonfiguration an die Zentralverriegelungselektronik oder an den Mikroprozessor kann dabei einzeln oder durch logische Verknüpfung erfolgen. Dabei sind die in den Figuren 4 bis 7 dargestellten logischen Verknüpfungen denkbar.

## Patentansprüche

1. Verfahren zur Zentralverriegelung eines Kraftfahrzeuges mit Diebstahlsicherungsfunktion, bei welchem durch ein Steuergerät nach Erhalt eines Steuerbefehls mindestens eine Schließstelle des Kraftfahrzeuges angesteuert wird und dabei die Zentralverriegelung und die Diebstahlsicherung aktiviert bzw. deaktiviert werden, wobei noch die Aktivierung der Diebstahlsicherung eine Meldung über die Aktivierung der Diebstahlsicherung für einen Zeitraum von x Sekunden erzeugt wird, wodurch in diesem Zeitraum die Anwesenheit einer Person im Kraftfahrzeug ein zusätzliches Signal auslöst, das zur Deaktivierung der Diebstahlsicherungsfunktion führt.

2. Einrichtung zur Durchführung des Verfahrens nach Anspruch 1, **dadurch gekennzeichnet**, daß das mit den Schließstellen (1) des Kraftfahrzeuges verbundene Steuergerät (3) mit einer Betätigungseinrichtung (2) zur Ausführung der Zentralverriegelung und der Diebstahlsicherung und einer Überwachungseinrichtung (4) zur Feststellung der Anwesenheit einer Person im Kraftfahrzeug ansteuerbar ist, wobei im Steuergerät (3) eine Sperrschaltung (5) vorgesehen ist, die die aktivierte Diebstahlsicherung beim Vorliegen eines Signals der Überwachungseinrichtung (4) deaktiviert sowie ein Zeitglied angeordnet ist, mit dem die Ausführung der Diebstahlsicherungsfunktion in jedem Fall um einen wählbaren Zeitabschnitt verzögert wird.

3. Einrichtung nach Anspruch 2, **dadurch gekennzeichnet**, daß als Überwachungseinrichtung (4) ein Sender-Empfänger-System vorgesehen ist, das auf sich verändernde Reflexionsverhältnisse infolge der Bewegung einer im Kraftfahrzeug befindlichen Person reagiert.

4. Einrichtung nach Anspruch 3, **dadurch gekennzeichnet**, daß als Überwachungseinrichtung (4) eine Diebstahlwarnanlage verwendet wird.

5. Einrichtung nach Anspruch 2, **dadurch gekennzeichnet**, daß als Überwachungseinrichtung (4) an den Fahrzeugsitzen auf Gewichtsbelastung reagierende Kontakte vorgesehen sind, durch welche die Anwesenheit einer Person anzeigbar ist.

6. Einrichtung nach Anspruch 2, **dadurch gekennzeichnet**, daß als Überwachungseinrichtung (4) Kontakte an den Schlössern der Sicherheitsgurte vorgesehen sind, durch welche die Anwesenheit einer Person anzeigbar ist.

7. Einrichtung nach Anspruch 2, **dadurch gekennzeichnet**, daß als Überwachungseinrichtung (4) ein Temperatur-Strahlungssensor vorgesehen ist.

8. Einrichtung nach einem der Ansprüche 2 bis 7, **dadurch gekennzeichnet**, daß die Überwachungseinrichtung (4) nebeneinander verschiedene Signalgeber enthält.

## Claims

1. A procedure for the central locking of a motor vehicle with a theft protection function, in which at least one locking point of the motor vehicle is triggered by a control unit after the receipt of a control command and the central locking and the theft protection are thereby activated or deactivated, wherein the activation of the theft protection still produces a message concerning the activation of the theft protection for a period of x seconds, whereby the presence of a person in the motor vehicle within this period triggers an additional signal which results in the deactivation of the theft protection function.

2. A device for carrying out the procedure according to claim 1, **characterized in that** the control unit (3) which is connected to the locking points (1) of the motor vehicle can be triggered by an actuating device (2) for effecting the central locking and the theft protection and by a monitoring device (4) for determining the presence of a person in the motor vehicle, wherein a disabling circuit (5) is provided in the control unit (3), which disabling circuit deactivates the activated theft protection on the presence of a signal from the monitoring device (4), and wherein a time function element is provided with which the execution of the theft protection function is delayed by a selectable time interval each time.

3. A device according to claim 2, **characterised in that** a transmitter-receiver system is provided as a monitoring device (4) and reacts to changing reflection conditions resulting from the movement of a person situated in the motor vehicle.

4. A device according to claim 3, **characterised in that** a theft warning installation is used as a monitoring device (4).

5. A device according to claim 2, **characterised in that** contacts on the vehicle seats, which react to weight loading, and by means of which the presence of a person can be indicated, are provided as a monitoring device (4).

6. A device according to claim 2, **characterised in that** contacts by means of which the presence of a person can be indicated are provided on the locks of the safety belts as a monitoring device (4).

7. A device according to claim 2, **characterised in that** a thermal radiation sensor is provided as a monitoring device (4).

8. A device according to any one of claims 2 to 7, **characterised in that** the monitoring device (4) contains different signal transmitters in parallel.

## Revendications

1. Procédé de verrouillage centralisé d'un véhicule à moteur avec une fonction antivol, dans le cas duquel, après réception d'une instruction de manoeuvre, au moins une position de fermeture du véhicule à moteur est commandée par un appareil de commande et le verrouillage centralisé et la fonction antivol y sont activés ou désactivés, procédé dans le cas duquel, après l'activation de la fonction antivol, une annonce concernant l'activation de la fonction antivol est produite pendant une période de x secondes, ce par quoi, pendant cette période, la présence d'une personne dans le véhicule à moteur déclenche un signal supplémentaire qui conduit à la désactivation de la fonction antivol.

2. Dispositif pour la mise en oeuvre du procédé selon la revendication 1, caractérisé par le fait que l'appareil de commande (3), lié aux positions de fermeture (1) du véhicule à moteur peut être commandé par un dispositif de manoeuvre (2) pour l'exécution du verrouillage centralisé et de la fonction antivol et par un dispositif de surveillance (4) pour déterminer la présence d'une personne dans le véhicule à moteur, dispositif dans lequel est prévu, dans l'appareil de commande (3), un circuit d'arrêt (5) qui, en présence d'un signal du dispositif de surveillance (4), désactive la fonction antivol activée, et dans lequel est disposé un élément temporisé par lequel l'exécution de la fonction antivol est dans chaque cas retardée d'un intervalle de temps choisi.

3. Dispositif selon la revendication 2, caractérisé par le fait que comme dispositif de surveillance (4) est prévu un système émetteur-récepteur qui réagit à des conditions de réflexion qui se modifient par suite du mouvement d'une personne qui se trouve dans le véhicule à moteur.

4. Dispositif selon la revendication 3, caractérisé par le fait que comme dispositif de surveillance (4) on emploie une installation d'avertissement à l'antivol

5. Dispositif selon la revendication 2, caractérisé par le fait que comme dispositif de surveillance (4) sont prévus sur les sièges du véhicule des contacts qui réagissent à la charge pondérale et par lesquels peut être indiquée la présence d'une personne.

6. Dispositif selon la revendication 2, caractérisé par le fait que comme dispositif de surveillance (4) sont prévus sur les boucles de ceinture de sécurité des contacts par lesquels peut être indiquée la présence d'une personne.

7. Dispositif selon la revendication 2, caractérisé par le fait que comme dispositif de surveillance (4) on emploie un détecteur de rayonnement thermique.

8. Dispositif selon l'une des revendications 2 à 7, caractérisé par le fait que le dispositif de surveillance (4) contient différents émetteurs de signaux l'un à côté de l'autre.
